# EUROPÄISCHE PATENTSCHRIFT

(11) **EP 0 809 339 B1**
(45) Veröffentlichungstag und Bekanntmachung des Hinweises auf die Patenterteilung: **24.10.2001**
(21) Anmeldenummer: 97890080.1
(22) Anmeldetag: 30.04.1997
(51) Int. Cl.: H02G 3/18

(54) **Elektrisches Installationsgerät**
Electrical installation device
Appareil pour installation électrique

(30) Priorität: 21.05.1996 AT 89796
(43) Veröffentlichungstag der Anmeldung: 26.11.1997
(73) Patentinhaber: Legrand Österreich Ges.m.b.H., 9241 Wernberg (AT)
(72) Erfinder: Ribic, Mirko, Dipl.-Ing., 9241 Wernberg (AT)
(74) Vertreter: Weinzinger, Arnulf, Dipl.-Ing.

(56) Entgegenhaltungen:
- DE-A- 3 941 613
- DE-A- 4 324 633
- GB-A- 2 170 660
- US-A- 4 071 158
- PATENT ABSTRACTS OF JAPAN vol. 14, no. 38 (E-878), 24.Januar 1990 & JP 01 270709 A (MATSUSHITA ELECTRIC WORKS LTD), 30.Oktober 1989,

## Beschreibung

Die Erfindung betrifft ein elektrisches Installationsgerät gemäß dem einleitenden Teil von Anspruch 1.

Üblicherweise sind elektrische Installationsgeräte, wie Steckdosen oder Schalter, zur Fixierung in einer Installationsdose mit Fixierkörpern in Form von Spreizkrallen versehen. Diese Spreizkrallen werden mit Hilfe von Schrauben-Verstellelementen zur Fixierung des Installationsgeräts auswärts geschwenkt, wobei sie sich an der Innenfläche der Installationsdose verkrallen. Ein Beispiel für eine derartige Spreizkrallen-Fixierung ist in der DE 40 28 766 C beschrieben. Diese bekannte Spreizkrallen-Fixierung ist überdies mit einer zwangsweisen Rückführung der Spreizkralle beim Lösen der Schraube versehen; zu diesem Zweck ist die als Winkelhebel ausgebildete Spreizkralle am einen, radial inneren Hebelende gabelförmig ausgebildet, und die Schraube nimmt dieses gabelförmige Hebelende im Bereich eines dickenreduzierten Schaftabschnittes zwischen dem Kopf und einer Schulter auf.

Von Nachteil ist bei derartigen Spreizkrallen-Fixierungen, daß die Spreizkrallen aufgrund ihrer einfachen Einsteck-Lagerung in Schlitzen von Haltelaschen, wobei keine exakte Schwenkachse definiert ist, den Sockelkörper in der Installationsdose häufig in nicht ausreichend genau ausgerichteten Positionen festhalten; ein weiterer Nachteil ist darin zu sehen, daß die Spreizkrallen mit ihren sich an der Dosen-Innenfläche verkrallenden Enden, in axialer Richtung der Installationsdose gesehen, in einer Tiefenposition vorliegen, in der in der Regel Öffnungen in der Dosenwand zwecks Einführung von elektrischen Leitungen vorliegen, so daß eine Fixierung des Sockelkörpers in der Installationsdose nur nach Verdrehen desselben möglich ist; dabei gelangt aber das Installationsgerät oft in eine unerwünschte Ausrichtung, so daß z.B. im Falle einer Steckdose die Kontaktöffnungen nicht exakt horizontal oder vertikal ausgerichtet sind.

Aus DE 18 39 475 U ist ein Installationsgerät bekannt, bei dem ein Fixierkörper mit einer Keilfläche vorgesehen ist, die an einem geneigten Randbord eines Sockel-Grundkörpers gleitet. Eine Spannschraube dient als Verstellelement, um den Fixierkörper längs der Schrägfläche des Randbordes nach außen zu drücken, wenn die Spannschraube in den Fixierkörper eingedreht wird. Diese Konstruktion weist den Nachteil auf, daß sich die Spannschraube beim Eindrehen zwangsläufig schrägstellt, wodurch sie sich in der Gewindebohrung im Fixierkörper verreiben kann und nur mehr schwer lösbar ist, wenn der Fixierkörper rückgestellt werden soll. Vor allem aber wird auch der Fixierkörper dann mit der Schraube schräggestellt, so daß er auch nicht mehr am schrägen Randbord mit seiner Keilfläche gleiten kann, sondern sich mit einer Kante am Randbord fest"fressen" wird.

Die DE 21 40 397 A zeigt ein Installationsgerät mit zwei am Sockel angeformten, d.h. mit ihm einstückigen Spreizhebeln, die durch einen über eine Stellschraube verstellbaren Keilkörper bzw. durch eine auf eine Keilfläche drückende Stellschraube radial nach außen schwenkbar sind, wobei der Drehpunkt der Schwenkbewegung durch ein Filmscharnier bzw. durch den Übergang des Spreizhebels zum Sockel festgelegt ist. Dort kann es jedoch leicht zum Reißen bzw. Brechen kommen.

Aus der DE 43 24 633 A ist schließlich ein elektrisches Installationsgerät bekannt, das als Ausgangspunkt für die Erfindung anzusehen ist, und bei dem die Fixierkörper durch entlang von bogenförmigen Führungen am Sockelkörper gleitende Spreizelemente gebildet sind. Dabei weisen die Spreizelemente jeweils einen oberen brückenähnlichen Steg auf, in den eine am Tragring des Sockelkörpers mit Hilfe eines gesonderten, im Tragring beweglich gelagerten Durchzugs schwenkbar angeordnete Halteschraube als Verstellelement eingreift. Die Fixierkörper werden hier somit jeweils beim Einschrauben der Halteschraube in den Durchzug gemäß einer bogenförmigen Bahn in die radial äußere Betriebsstellung überführt.

Es ist nun Aufgabe der Erfindung, ein elektrisches Installationsgerät der eingangs angeführten Art vorzusehen, bei dem eine exakte Fixierung in der Installationsdose ermöglicht wird, wobei der jeweilige Fixierkörper weiters auch in einem Bereich an der Dosen-Innenwand angreifen können soll, der in axialem Abstand von den Öffnungen in der Dosenwand vorliegt; es soll demgemäß eine Fixierung des Installationsgerätes in der Installationsdose unabhängig davon möglich sein, ob in dem Winkelbereich der Dosenwand, der dem Fixierkörper zugeordnet ist, eine Öffnung für die Hindurchführung von elektrischen Leitungen vorhanden ist oder nicht. Auch soll eine genaue Verstellung und Rückführung der Fixierkörper sowie eine dauerhafte Ausbildung erzielt werden.

Zur Lösung dieser Aufgabe sieht die Erfindung ein elektrisches Installationsgerät mit den in Anspruch 1 angegebenen Merkmalen vor. Vorteilhafte Ausführungsformen und Weiterbildungen sind Gegenstand der Unteransprüche. Mit der erfindungsgemäßen Ausbildung wird der vorstehenden Zielsetzung in vorteilhafter Weise entsprochen, wobei insbesondere eine exakte Bewegung des jeweiligen Fixierkörpers bei der Fixierung des Installationsgerätes in einer Installationsdose sichergestellt ist, indem der Fixierkörper in der zugehörigen Ausnehmung im Sockelkörper geradlinig im wesentlichen radial auswärts, also in Richtung von der Mittenachse des Sockelkörpers zur Dosenwand hin, verschoben wird. Es liegt somit eine translatorische Bewegung des Fixierkörpers relativ zum Sockelkörper vor, für die eine exakte Gleitführung sichergestellt werden kann, so daß in der Folge unerwünschte Bewegungen des Sockelkörpers beim Fixieren sicher vermieden werden können. Dadurch, daß der schieberartige Fixierkörper beim Verstellen eine geradlinige radiale Bewegung ausführt, und er in einer entsprechenden Ausnehmung geführt ist, wird eine robuste Ausbildung erhalten, die ein besonders festes Festklemmen in der Installationsdose gewährleistet. Der Fixierkörper kann an seiner radial außen liegenden Stirnseite oder Außenseite mit Krallenelementen oder dergl. versehen sein, mit denen er bei seinem Auswärtsverschieben einen festen Halt an der Innenfläche der Installationsdose sicherstellt. Diese Krallenelemente können am Fixierkörper, bezogen auf die Axialrichtung des Installationsgerätes, in verschiedenen Tiefenpositionen vorliegen, wobei der Fixierkörper selbst zumindest an seiner radialen Außenseite eine relativ große axiale Dimension haben kann, so daß der Fixierkörper auch im Bereich von Kabeldurchführöffnungen in der Installationsdose mit Krallenelementen an der Dosenwand, nämlich insbesondere zwischen diesen Öffnungen und der im montierten Zustand mit der Wand, in der die Installationsdose eingesetzt ist, abschließenden Vorderseite der Installationsdose (oder aber von der Vorderseite abgewandt axial hinter diesen Öffnungen) in Eingriff gelangen kann. Weiters wird dadurch, daß das stiftartige Verstellelement am Sockelkörper drehbar angeordnet ist und der Fixierkörper eine zur Richtung seiner Verschiebung schräg verlaufende Keilfläche hat, wobei das beim Drehen bezüglich des Sockelkörpers axial verstellbare Verstellelement an der Keilfläche des Fixierkörpers anliegt, eine einfache Auswärtsverschiebung des Fixierkörpers bei vergleichsweise kleinem Drehmoment am Verstellelement sowie eine zuverlässige Selbsthemmung bei ausgeschobenem Fixierkörper erreicht. Das Verstellelement trägt hier somit in an sich bekannter Weise ein Schraubengewinde, mit dem es bezüglich des Sockelkörpers axial verstellbar ist, und der Fixierkörper bildet eine Art Keil, an dessen schräger Keilfläche das Verstellelement anliegt und im Falle einer Verstellung eine Kraft ausübt, die über diese Keilfläche in Komponenten zerlegt wird, von denen die eine zum radialen Auswärtsverschieben des Fixierkörpers genutzt wird. Gegen ein unerwünschtes Zurückschieben des Fixierkörpers wirkt hingegen das System Keilfläche-Verstellelement-Gewinde selbsthemmend, so daß der Fixierkörper mit ausreichender Kraft gegen die Innenfläche der Installationsdose gedrückt werden kann, um ein unerwünschtes Herausziehen des Installationsgerätes aus der Dose zu verhindern.

Für eine sichere, spielarme Relativbewegung zwischen Verstellelement und Fixierkörper ist es weiters von Vorteil, wenn das Verstellelement mit einer Wand der nutartigen Ausnehmung in formschlüssigem Eingriff steht.

Für die Rückführung des Fixierkörpers wäre es an sich denkbar, eine Feder zwischen dem Fixierkörper und dem Sockelkörper anzuordnen, die den Fixierkörper in die Ruhestellung zieht oder drückt; dabei müßte aber beim Auswärtsschieben ebenso wie bei der Fixierung die Federbelastung durch eine erhöhte Kraft mit überwunden werden, abgesehen vom zusätzlich erforderlichen baulichen Aufwand. Um daher bei einer einfachen konstruktiven Ausbildung, die auch einen problemlosen Zusammenbau der einzelnen Komponenten ermöglicht, nicht nur ein sicheres Auswärtsverschieben des Fixierkörpers, sondern auch eine zwangsweise Rückführung desselben zu erzielen, ist erfindungsgemäß auch vorgesehen, daß die im Fixierkörper vorgesehene nutartige Ausnehmung die Keilfläche bildet und hinterschnitten ausgebildete Seitenwände aufweist, wobei die geometrische Achse dieser Ausnehmung in der der Verschiebbarkeit des Fixierkörpers entsprechenden Radialebene liegt und schräg zur geometrischen Achse der Verschiebelagerung des Fixierkörpers verläuft, und daß das stiftartige Verstellelement eine in der nutartigen Ausnehmung des Fixierkörpers befindliche Verdickung aufweist, welche in Axialrichtung des Verstellelementes formschlüssig in der nutartigen Ausnehmung gehalten und in Axialrichtung der nutartigen Ausnehmung in dieser Ausnehmung verschiebbar ist.

Für die Kraft-Übersetzung bei der radialen Verstellung des Fixierkörpers wäre ein möglichst großer Keilwinkel der Keilfläche (relativ zur Richtung der Schiebebewegung) günstig; für die beschriebene Selbsthemmung wäre andererseits jedoch der Keilwinkel des Keils, bezogen auf die Richtung der Verschiebebewegung des Fixierkörpers, vergleichsweise klein zu wählen. In der Praxis hat sich herausgestellt, daß ein guter Kompromiß dann erzielt werden kann, wenn die Schrägstellung der Keilfläche zur geometrischen Achse der Verschiebelagerung des Fixierkörpers zwischen 20° und 45° liegt, wobei besonders bevorzugt wird, daß die Schrägstellung etwa 30° beträgt.

An sich kann der Fixierkörper aus Metall bestehen, das an seiner Außenseite Krallen hat. Da aber beim vorliegenden Installationsgerät der jeweilige Fixierkörper im Vergleich zu einem Installationsgerät mit den bekannten Spreizkrallen innerhalb des Sockelkörpers relativ weit radial nach innen reicht, wobei er in die Nähe von elektrischen Anschlußteilen gelangen kann, hat es sich aus Sicherheitsgründen auch als vorteilhaft erwiesen, wenn der Fixierkörper aus elektrisch isolierendem Material besteht. Dabei kann der Fixierkörper beispielsweise aus Kunststoff oder Keramik bestehen, wogegen der Sockelkörper des Installationsgerätes beispielsweise aus einem Acetalharz bestehen kann. Bei derartigen Materialien ist auch eine gute Gleitfähigkeit des Fixierkörpers im Sockelkörper sichergestellt. An sich kann es aber auch günstig sein, einen besonders reibungsarmen Gleitbelag in der Ausnehmung des Sockelkörpers und/oder an der Unterseite des Fixierkörpers, im Bereich der aneinandergleitenden Flächen, vorzusehen.

Der Fixierkörper kann an seiner radialen Außenseite (Stirnseite) beispielsweise mit leistenförmigen Krallenelementen versehen sein; vorzugsweise trägt er an seiner Außenseite einen oder mehrere Zacken oder Dorne. Diese Zacken oder Dorne könnten an sich aus dem Material des Fixierkörpers gebildet sein, wobei dann allerdings erforderlich ist, daß das Material des Fixierkörpers eine ausreichende Härte aufweist. Eine derartige Ausbildung von Zacken, Leisten oder Dornen unmittelbar einfach aus dem Material des Fixierkörpers wäre vor allem dann denkbar, wenn an der Innenfläche der Installationsdose eine Riffelung oder dergl. vorgesehen ist, wie dies an sich bekannt ist; es würde dann eine Art formschlüssiger Eingriff der Dosen-Innenfläche und des Fixierkörpers erhalten. Im Hinblick auf einen festen Halt des Fixierkörpers an der Innenfläche der Intallationsdose unabhängig von deren Ausbildung hat es sich aber als besonders günstig erwiesen, wenn in das Material des Fixierkörpers an der Außenseite wenigstens ein Metallstift, welcher einen Dorn bildet, eingebettet ist. Ein derartiger Dorn drückt sich beim Anpressen des Fixierkörpers an die Innenfläche der Installationsdose in das (Kunststoff-)Material dieser Dose, so daß ein verläßlicher Halt sichergestellt wird.

Damit eine Fixierung in der Installationsdose zwischen einer etwaigen Durchführungsöffnung für elektrische Leitungen und der Vorderseite der Installationsdose problemlos sichergestellt wird, kann mit Vorteil weiters vorgesehen werden, daß der oder die an der Außenseite des Fixierkörpers vorgesehenen Zacken oder Dorne in der näher zur Vorderseite des Installationsgerätes liegenden Zone der Fixierkörper-Außenseite angeordnet ist bzw. sind.

Um beim Einbau des vorliegenden elektrischen Installationsgerätes in eine Installationsdose ein "Hineinziehen" des Installationsgerätes für eine straffe, an der Vorderseite bündige Positionierung zu erreichen (ähnlich wie dies bei einer Befestigung mit den bekannten Spreizkrallen durch deren Schwenkbewegung ermöglicht wird), hat es sich schließlich als besonders vorteilhaft erwiesen, wenn der den Fixierkörper führende Boden der im Sockelkörper vorgesehenen Ausnehmung ebenso wie die diesem Boden zugewandte Unterseite des Fixierkörpers bezüglich einer zur Vorderseite des Installationsgerätes parallelen Ebene einwärts schräg abfallend verläuft.

Die Erfindung wird nachstehend anhand von in der Zeichnung veranschaulichten bevorzugten Ausführungsbeispielen, auf die sie jedoch nicht beschränkt sein soll, noch weiter erläutert. Im einzelnen zeigen in der Zeichnung:
Fig.1 eine Draufsicht, teilweise im Schnitt, gemäß der Linie I-I in Fig.2, auf ein elektrisches Installationsgerät in Form einer Steckdose mit zwei einander diametral gegenüberliegenden Fixierkörpern;
Fig.2 einen Axialschnitt durch dieses Installationsgerät gemäß Fig.1 im in eine Installationsdose, z.B. in einer Maueröffnung, eingesetzten Zustand, im wesentlichen gemäß der Linie II-II in Fig.1;
Fig.3 eine schaubildliche Ansicht eines Fixierkörpers für das vorliegende Installationsgerät;
Fig.4 eine Ansicht des Sockelkörpers des Installationsgerätes, gemäß Pfeil IV in Fig.1, wobei der Fixierkörper weggelassen wurde, um so die Ausnehmung im Sockelkörper sowie das Verstellelement für den Fixierkörper zu veranschaulichen; die
Figuren 5 und 6 in einer der Fig.4 vergleichbaren Stirnansicht sowie in einer Teil-Seitenansicht gemäß Pfeil VI in Fig.1 eine alternative Ausführungsform, mit einem gegenüber den Fig.1 und 2 hinsichtlich der Krallenelemente modifizierten Fixierkörper; und
Fig.7 in einer Seitenansicht ähnlich Fig.6 eine weitere Ausführungsform des Fixierkörpers.

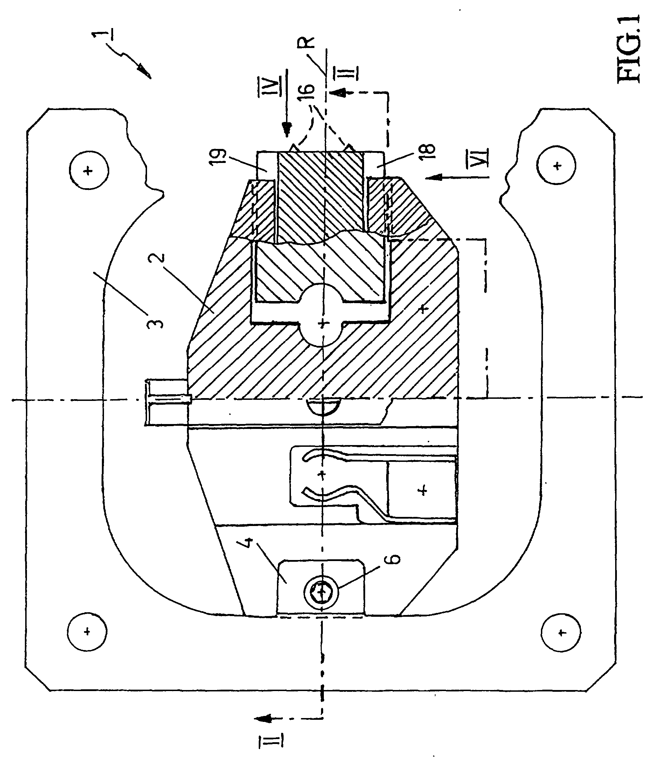

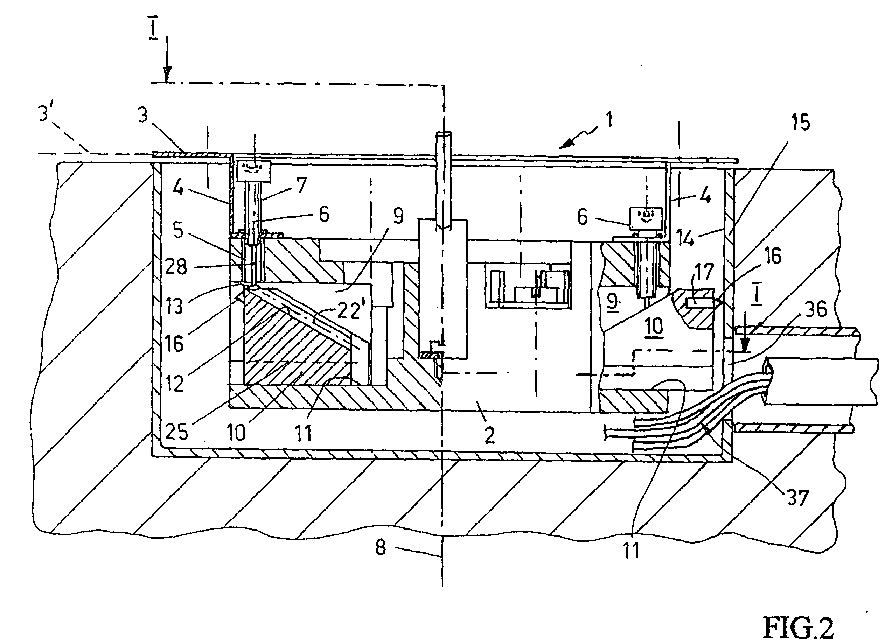

Bei dem in Fig.1 und 2 gezeigten elektrischen Installationsgerät 1 ist in an sich herkömmlicher Weise ein Sockelkörper 2 vorgesehen, der im vorliegenden Beispiel für die Realisierung einer Schuko-Steckdose ausgebildet ist und in ebenfalls an sich herkömmlicher Weise mit einem Rahmen 3 verbunden ist, der die Vorderseite 3' des Installationsgerätes 1 im eingebauten Zustand (siehe Fig.2) definiert. Im einzelnen ist der Rahmen 3 mit nach hinten abgewinkelten Laschen 4 am Sockelkörper 2, und zwar an dessen Vorderseite, mit Hilfe von Niethülsen 5 befestigt, und diese Niethülsen 5 sind mit einem Innengewinde versehen, wobei jeweils ein stiftartiges Verstellelement 6, das einen Schaftabschnitt 7 mit einem entsprechenden Außengewinde aufweist, in diese Gewinde-Niethülsen 5 eingeschraubt ist.

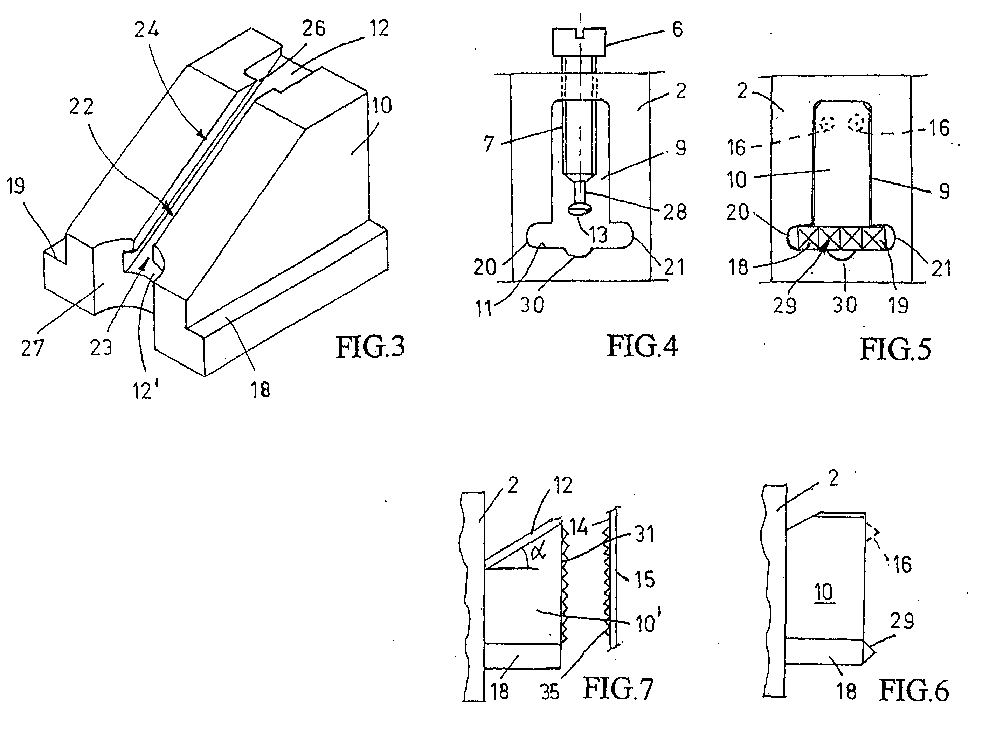

Im Sockelkörper 2 ist, in axialer Richtung des elektrischen Installationsgerätes 1 gesehen, vgl. auch die Achse 8 in Fig.2, hinter den Niethülsen 5 jeweils eine Ausnehmung 9 vorgesehen, in der ein Fixierkörper 10 verschiebbar aufgenommen ist. Dieser Fixierkörper 10 ist schieberartig ausgebildet und translatorisch verstellbar, wobei er mit seiner Innen- oder Unterseite am Boden 11 der Ausnehmung 9 gleitet. Der Fixierkörper 10 ist, wie außer aus Fig.2 insbesondere auch aus Fig.3 ersichtlich ist, insgesamt in der Art eines Keiles ausgebildet, wobei seine der Vorderseite 3' des Installationsgerätes 1 zugewandte Oberseite eine Keilfläche 12 aufweist, die mit dem stiftartigen Verstellelement 6, und zwar mit dessen innenliegender Stirnseite, die im vorliegenden Beispiel eine allgemein linsenförmige Verdickung 13 aufweist, zusammenwirkt. An seiner radial außenliegenden Stirnseite, nachstehend kurz Außenseite genannt, trägt der bzw. jeder Fixierkörper 10 ein Krallelement, mit dem er in der Betriebsstellung, vgl. Fig.2, rechte Hälfte, gegen die Innenfläche 14 einer Installationsdose 15 gepreßt wird, die zur Aufnahme des Installationsgerätes 1 vorgesehen ist. Im Ausführungsbeispiel gemäß Fig.2 ist dieses Krallelement durch Dorne 16 gebildet, wobei bevorzugt jeweils zwei derartige Dorne 16 nebeneinander an der Außenseite des Fixierkörpers 10 vorgesehen sind (wie aus Fig.1 hervorgeht, in der diese Dorne 16 zwecks Veranschaulichung eingezeichnet wurden, auch wenn sie entsprechend der Schnittführung I-I in Fig.2 nicht ersichtlich wären). Die Dorne 16 sind dabei durch die Spitzen von in das Material der Fixierkörper 10 eingebetteten Metallstiften 17 gebildet. Das Material des jeweiligen Fixierkörpers 10 ist bevorzugt ein isolierendes Kunststoff- oder Keramikmaterial, gegebenenfalls aber auch Metall.

Wie insbesondere aus Fig.3 ersichtlich ist, weist der bzw. jeder Fixierkörper 10 in seinem Bodenbereich seitliche Führungsflansche 18, 19 auf, mit denen er in entsprechenden seitlichen Vertiefungen 20, 21 der Ausnehmung 9 im Sockelkörper 2 (vgl. auch Fig.4 und 5) geführt ist. An seiner Keilflächen-Oberseite weist der Fixierkörper 10 eine nutartige Ausnehmung 22 auf, deren Seitenwände hinterschnitten ausgebildet sind, so daß eine breitere Führungs"kammer" 23 unterhalb bzw. innerhalb eines inneren Führungsschlitzes 24 erhalten wird, deren Boden 12' die vorstehend erwähnte Keilfläche 12 bildet. Diese Keilfläche 12 verläuft unter einem Winkel α (siehe Fig.7) relativ zur geometrischen Achse 25 (siehe Fig.2, linke Hälfte) der Verschiebelagerung des Fixierkörpers 10 in der Ausnehmung 9, und zwar von innen radial auswärts ansteigend, wobei dieser Keilwinkel α beispielsweise 30°, allgemein zwischen 20° und 45°, betragen kann.

Wie schließlich aus Fig.3 noch ersichtlich ist, ist der Fixierkörper 10 im Bereich der beiden Enden 26, 27 seiner nutartigen Ausnehmung 22 ausgebrochen, um an diesen Enden 26, 27 das Verstellelement 6 mit seiner linsenförmigen Verdickung 13 in die längliche Kammer 23 der nutartigen Ausnehmung 22 einführen zu können. Die linsenförmige Verdickung 13 ist, wie insbesondere aus Fig.4 zu ersehen ist, über einen querschnittskleineren Schaftabschnitt 28 mit dem Gewindeabschnitt 7 des Verstellelements 6, der das Außengewinde trägt, verbunden. Dieser querschnittskleinere Schaftabschnitt 28 gleitet im Betrieb im engeren Führungsschlitz 24, und die hinterschnittene Ausbildung der Seitenwände der nutartigen Ausnehmung 22 stellt in Verbindung mit der linsenförmigen Verdickung 13 des Verstellelements 6 sicher, daß beim Drehen bzw. axialen Verstellen (Einschrauben oder Ausschrauben) des Verstellelementes 6 im Sockelkörper 2 sowohl ein Auswärtsverschieben des Fixierkörpers 10 (durch Angriff an der Keilfläche 12) als auch ein Einwärtsschieben (durch Angriff der Oberseite der Verdickung 13 an den Hinterschneidungen) ermöglicht wird.

Im Betrieb wird jeder Fixierkörper 10 für sich aus seiner inneren, in Fig.2 linke Hälfte gezeigten Ruhestellung dadurch auswärts gegen die Innenfläche 14 der Installationsdose 15 verschoben, daß das stiftartige Verstellelement 6 mit Hilfe eines geeigneten Werkzeuges, etwa eines Schraubendrehers oder eines Imbusschlüssels, je nach Kopfausbildung des Verstellelements 6, verdreht und dabei in der Hülse 5 einwärts geschraubt wird, d.h. axial einwärts verstellt wird, wobei das Stirnende des Verstellelements 6 mit der linsenförmigen Verdickung 13 gegen die Keilfläche 12 der nutartigen Ausnehmung 22 gedrückt wird. Dadurch wird eine auf den Fixierkörper 10 wirkende Kraftkomponente erhalten, die dessen radiales Ausschieben in der Ausnehmung 9 im Sockelkörper 2 entlang der geometrischen Achse 25 bewirkt, bis schließlich der Fixierkörper 10 mit seinen Dornen 16 an die Innenfläche 14 der Installationsdose 15 angepreßt wird und sich an dieser verkrallt, vgl. die Darstellung in der rechten Hälfte von Fig.2. Das System: Fixierkörper 10 mit Keilfläche 12/Verstellelement 6 mit Außengewinde/Niethülse 5 mit Innengewinde ist dabei auch in diesem Anpreßzustand ausreichend selbsthemmend, so daß der Fixierkörper 10 in der erreichten Fixierstellung verbleibt, ohne daß zusätzliche Sicherungselemente, wie etwa eine Kontramutter, für das Verstellelement 6 vonnöten wären.

Soll das Installationsgerät 1 danach wieder aus der Installationsdose 15 herausgenommen werden, so wird jedes Verstellelement 6 aus der in Fig.2 rechts gezeigten einwärts geschraubten Stellung losgeschraubt, wobei seine Verdickung 13 mit der gemäß Darstellung in der Zeichnung, Fig.2, oberen Seite an der Unterseite der vorspringenden Leisten der hinterschnittenen Seitenwände der nutartigen Ausnehmung 22 zur Anlage kommt und so über die durch diese Leisten-Unterseiten definierte Keilfläche den Fixierkörper 10 wieder aus seiner äußeren Betriebsstellung gemäß Fig.2, rechte Hälfte, in seine innenliegende Ruhestellung gemäß Fig.2, linke Hälfte, zurückzieht. Beim beschriebenen Ausführungsbeispiel ist somit in einfacher Weise auch eine zwangsweise Rückführung der Fixierkörper 10 realisiert.

Bei der Ausführungsform des Fixierkörpers 10 gemäß Fig.5 und 6 ist gegenüber jener gemäß Fig.1 bis 3 insofern eine Abänderung vorgesehen, als hier anstatt der oder aber vorzugsweise zusätzlich zu den gestrichelt eingezeichneten Dornen 16 eine untere (in der Einbaustellung gemäß Fig.2 innere) gezahnte Leiste, mit pyramidenförmigen Spitzen oder Zacken 29 in einer Reihe in der Höhe der leistenförmigen Seitenflanschen 18, 19, als Krallelement vorgesehen ist.

Aus Fig.5 ist weiters ebenso wie aus Fig.4 eine gerundete Vertiefung oder Rille 30 im Boden 11 der nutartigen Ausnehmung 9 im Sockelkörper 2 ersichtlich, wobei diese Rille 30 die Kontaktflächen-Reibung am Fixierkörper 10 verringert.

Bei der Ausführungsform gemäß Fig.7 besitzt der Fixierkörper 10' an seiner Außenseite im wesentlichen über seine gesamte Bauhöhe eine Verzahnung 31. Weiters ist der Fixierkörper 10' an seiner schrägen Keilfläche 12 mit einer Auflage 32 aus hartem, reibungsarmen Material versehen.

Der Fixierkörper 10' kann an seiner dem Boden 11 der nutartigen Ausnehmung 9 zugewandten Seite mit einer reibungsarmen Gleitschicht (nicht gezeigt) versehen sein, was besonders dann vorteilhaft ist, wenn beim Auswärtsverschieben des Fixierkörpers 10 eine - wenn auch geringfügige - Steigung (in der Zeichnung nicht ersichtlich; in der Praxis einige wenige Grad) zu überwinden hat.

Selbstverständlich könnte eine derartige reibungsarme Gleitschicht 34 auch den Boden 11 der nutartigen Ausnehmung 9 im Sockelkörper 2 bilden, und derartige Gleitschichten können auch bei den zuvor beschriebenen Ausführungsbeispielen ebenso angeordnet werden.

Die Ausführungsform gemäß Fig.7, aber auch jene gemäß Fig.5 und 6 eignen sich insbesondere zum Zusammenarbeiten mit Installationsdosen 15 mit einer Riffelung 35 (siehe Fig.7) an der Innenfläche 14, um so eine besonders gute Fixierung des Installationsgerätes 1 in der Installationsdose 15 zu erzielen.

Andererseits ermöglichen die Dorne 16 in der gezeigten Position einen sicheren Halt in der Installationsdose 15 auch dann, wenn in dieser Dose 15 Öffnungen 36 für Durchführung von elektrischen Zuleitungen bzw. Kabeln 37 vorhanden sind: Wie aus Fig.2 ersichtlich ist, ist es möglich, die Dorne 16 in einer derartigen Höhe an der radialen Außenseite des Fixierkörpers 10 vorzusehen, daß sie im Bereich zwischen der Öffnung 36 und der Vorderseite 3' des Installationsgerätes 1 an die Innenfläche 14 der Installationsdose 15 angepreßt werden (was mit den herkömmlichen Spreizkrallen nicht möglich ist).

Die radiale Außenseite der Fixierkörper 10 bzw. 10' ist in den gezeigten Ausführungsbeispielen eben, vgl. z.B. Fig.1 bis 3. Es kann aber auch - insbesondere bei der Ausführungsform gemäß Fig.5/6 oder jener gemäß Fig.7 - auch zweckmäßig sein, diese radiale Außenseite der Krümmung der Installationsdose 15 anzupassen; gegebenenfalls genügt es auch, nur den Bereich der Zacken-Leiste 29 bzw. der Verzahnung 31 entsprechend bogenförmig verlaufen zu lassen; im Falle von drei (oder mehr) Dornen 16 in einer Höhe können auch deren Spitzen auf einem Kreisbogen entsprechend dem Radius der Dosenwand liegen.

## Patentansprüche

1. Elektrisches Installationsgerät (1) mit einem Sockelkörper (2) und wenigstens einem an diesem beweglich angeordneten Fixierkörper (10), welcher zum Festhalten des Installationsgerätes (1) in einer Installationsdose (15) vorgesehen und mit Hilfe eines Verstellelements (6) aus einer inneren Ruhestellung in einer im Sockelkörper (2) vorgesehenen Ausnehmung (9) im wesentlichen radial nach außen in eine Betriebsstellung zwangsläufig bewegbar und dabei mit seiner Außenseite an die Innenfläche der Installationsdose (15) anpressbar ist, und der aus dieser Betriebsstellung wieder nach innen in die Ruhestellung bewegbar und so von der Innenfläche der Installationsdose (15) lösbar ist, **dadurch gekennzeichnet, dass** der schieberartige Fixierkörper (10) in der Ausnehmung (9) geradlinig geführt ist, und dass der Fixierkörper (10) eine zur Richtung seiner Verschiebung schräg verlaufende Keilfläche (12) hat, wobei das am Sockelkörper (2) drehbar angeordnete, beim Drehen bezüglich des Sockelkörpers (2) axial verstellbare Verstellelement (6) an der Keilfläche (12) des Fixierkörpers (10) anliegt, dass der Fixierkörper (10) mit einer nutartigen Ausnehmung (22) versehen ist, in welche das stiftartige Verstellelement (6) ragt,dass die im Fixierkörper (10) vorgesehene nutartige Ausnehmung (22), die die Keilfläche (12) bildet, hinterschnitten ausgebildete Seitenwände aufweist, wobei die geometrische Achse (22') dieser Ausnehmung (22) in der der Verschiebbarkeit des Fixierkörpers (10) entsprechenden Radialebene (R) liegt und schräg zur geometrischen Achse (25) der Verschiebung des Fixierkörpers (10) verläuft, und dass das stiftartige Verstellelement (6) eine in der nutartigen Ausnehmung (22) des Fixierkörpers (10) befindliche Verdickung (13) aufweist, welche durch die hinterschnittenen Seitenwände in Axialrichtung des Verstellelements (6) formschlüssig in der nutartigen Ausnehmung (22) gehalten und in Axialrichtung der nutartigen Ausnehmung (22) in dieser Ausnehmung (22) verschiebbar ist.

2. Elektrisches Installationsgerät nach Anspruch 1, **dadurch gekennzeichnet, dass** das Verstellelement (6) mit einer Wand der nutartigen Ausnehmung (22) in formschlüssigem Eingriff steht.

3. Elektrisches Installationsgerät nach Anspruch 1 oder 2, **dadurch gekennzeichnet, dass** die Schrägstellung der Keilfläche (12) zur geometrischen Achse (25) der Verschiebelagerung des Fixierkörpers (10) zwischen 20° und 45° liegt.

4. Elektrisches Installationsgerät nach Anspruch 3, **dadurch gekennzeichnet, dass** die Schrägstellung etwa 30° beträgt.

5. Elektrisches Installationsgerät nach einem der Ansprüche 1 bis 4, **dadurch gekennzeichnet, dass** der Fixierkörper (10) aus elektrisch isolierendem Material besteht.

6. Elektrisches Installationsgerät nach einem der Ansprüche 1 bis 5, **dadurch gekennzeichnet, dass** der Fixierkörper (10) an seiner Außenseite einen oder mehrere Zacken (29; 31) oder Dorne (16) trägt.

7. Elektrisches Installationsgerät nach einem der Ansprüche 1 bis 6, **dadurch gekennzeichnet, dass** in das Material des Fixierkörpers (10) an der Außenseite wenigstens ein Metallstift (17), welcher einen Dorn (16) bildet, eingebettet ist.

8. Elektrisches Installationsgerät nach Anspruch 6 oder 7, **dadurch gekennzeichnet, dass** der oder die an der Außenseite des Fixierkörpers (10) vorgesehenen Zacken oder Dorne (16) in der näher zur Vorderseite (3') des Installationsgerätes (1) liegenden Zone der Fixierkörper-Außenseite angeordnet ist bzw. sind.

9. Elektrisches Installationsgerät nach einem der Ansprüche 1 bis 8, **dadurch gekennzeichnet, dass** der den Fixierkörper (10) führende Boden der im Sockelkörper (2) vorgesehenen Ausnehmung (9) ebenso wie die diesem Boden zugewandte Unterseite des Fixierkörpers (10) bezüglich einer zur Vorderseite (3') des Installationsgerätes (1) parallelen Ebene einwärts schräg abfallend verläuft.

## Claims

1. An electrical installation device (1) comprising a base body (2) and at least one fixing body (10) movably arranged thereon, said fixing body being provided for retaining the installation device (1) in an installation box (15) and being positively movable by aid of an adjustment element (6) from an inner resting position in a recess (9) located in the base body (2) substantially radially outwardly into an operating position and thereby pressable with its outer side against the inner surface of the installation box (15), and being movable from this operating position inwardly again into its resting position and thus being releasable from the inner surface of the installation box (15), **characterised in that** the slide-like fixing body (20) is rectilinearly guided in the recess (9), and that the fixing body (10) has a wedge surface (12) extending under an inclination to the direction of its displacement, the adjustment element (6) which is rotatably arranged on the base body (2) and axially adjustable during a rotation relative to the base body (2) abutting on the wedge surface (12) of the fixing body (10), that the fixing body (10) is provided with a groove-like recess (22) into which the pin-like adjustment element (6) projects, that the groove-type recess (22) provided in the fixing body (10) and forming the wedge surface (12) has side walls designed to be undercut, the geometric axis (22') of this recess (22) being located in the radial plane (R) corresponding to the displaceability of the fixing body (10) and extending under an inclination to the geometric axis (25) of the displacement of the fixing body (10), and that the pin-like adjustment element (6) has a thickened portion (13) located in the groove-like recess (22) of the fixing body (10), which thickened portion is positively retained in the groove-like recess (22), in the axial direction of the adjustment element (6), by the undercut side walls and is displaceable in this recess (22) in the axial direction of the groove-like recess (22).

2. An electrical installation device according to claim 1, **characterised in that** the adjustment element (6) is positively engaged with one wall of the groove-like recess (22).

3. An electrical installation device according to claim 1 or 2, **characterised in that** the inclination of the wedge surface (12) to the geometric axis (25) of the displacement-allowing mounting of the fixing body (10) ranges between 20° and 45°.

4. An electrical installation device according to claim 3, **characterised in that** the inclination is approximately 30°.

5. An electrical installation device according to any one of claims 1 to 4, **characterised in that** the fixing body (10) is made of an electrically insulating material.

6. An electrical installation device according to any one of claims 1 to 5, **characterised in that** the fixing body (10) has one or more teeth (29; 31) or spikes (16) on its outer side.

7. An electrical installation device according to any one of claims 1 to 6, **characterised in that** at least one metal pin (17) forming a spike (16) is embedded in the material of the fixing body (10) on the outer side thereof.

8. An electrical installation device according to claim 6 or 7, **characterised in that** the tooth (teeth) or spike(s) (16) provided on the outer side of the fixing body (10) is (are) arranged in the zone of the fixing body outer side located more closely to the front side (3') of the installation device (1).

9. An electrical installation device according to any one of claims 1 to 8, **characterised in that** the bottom of the recess (9) provided in the base body (2) and guiding the fixing body (10) , just like the lower side of the fixing body (10) facing this bottom extends inwardly downwardly inclined relative to a plane in parallel to the front side (3') of the installation device (1).

## Revendications

1. Appareil d'installation électrique (1) avec un corps formant socle (2) et avec au moins un corps de fixation (10) qui est agencé mobile sur celui-ci, qui est prévu pour fixer l'appareil d'installation (1) dans une boîte d'installation (15), qui peut être déplacé sous contrôle à l'aide d'un élément de réglage (6) à partir d'une position de repos intérieure dans un évidement (9) prévu dans le corps formant socle (2) globalement radialement vers l'extérieur jusque dans une position de fonctionnement, qui peut être poussé ce faisant avec son côté extérieur contre la surface intérieure de la boîte d'installation (15), qui peut être redéplacé à partir de cette position de fonctionnement vers l'intérieur jusque dans la position de repos et qui peut ainsi être détaché de la surface intérieure de la boîte d'installation (15), **caractérisé en ce que** le corps de fixation (10) du type coulisseau est guidé en ligne droite dans l'évidement (9), **en ce que** le corps de fixation (10) a une surface de coin (12) s'étendant obliquement par rapport à la direction de son déplacement, l'élément de réglage (6) qui est agencé rotatif sur le corps formant socle (2) et réglable axialement lors de la rotation par rapport au corps formant socle (2) étant alors appuyé contre la surface de coin (12) du corps de fixation (10), **en ce que** le corps de fixation (10) est muni d'un évidement (22) du type rainure dans laquelle pénètre l'élément de réglage (6) du type broche, **en ce que** l'évidement (22) du type rainure qui est prévu dans le corps de fixation (10) et qui forme la surface de coin (12) comporte des parois latérales conçues en contre-dépouille, l'axe géométrique (22') de cet évidement (22) se trouvant alors dans le plan radial (R) correspondant à la possibilité de déplacement du corps de fixation (10) et s'étendant alors obliquement par rapport à l'axe géométrique (25) du déplacement du corps de fixation (10), et **en ce que** l'élément de réglage (6) du type broche comporte un épaississement (13) qui se trouve dans l'évidement (22) du type rainure du corps de fixation (10), qui est tenu par concordance de formes dans l'évidement (22) du type rainure par les parois latérales en contre-dépouille dans la direction axiale de l'élément de réglage (6) et qui est mobile dans l'évidement (22) dans la direction axiale de l'évidement (22) du type rainure.

2. Appareil d'installation électrique selon la revendication 1, **caractérisé en ce que** l'élément de réglage (6) est en prise par concordance de formes avec une paroi de l'évidement (22) du type rainure.

3. Appareil d'installation électrique selon la revendication 1 ou 2, **caractérisé en ce que** l'obliquité de la surface de coin (12) par rapport à l'axe géométrique (25) du logement de déplacement du corps de fixation (10) est comprise entre 20° et 45°.

4. Appareil d'installation électrique selon la revendication 3, **caractérisé en ce que** l'obliquité vaut environ 30°.

5. Appareil d'installation électrique selon l'une quelconque des revendications 1 à 4, **caractérisé en ce que** le corps de fixation (10) est en un matériau électriquement isolant.

6. Appareil d'installation électrique selon l'une quelconque des revendications 1 à 5, **caractérisé en ce que** le corps de fixation (10) supporte sur son côté extérieur une ou plusieurs pointes (29 ; 31) ou broches (16).

7. Appareil d'installation électrique selon l'une quelconque des revendications 1 à 6, **caractérisé en ce qu'**au moins une tige métallique (17) formant une broche (16) est noyée dans le matériau du corps de fixation (10) sur le côté extérieur.

8. Appareil d'installation électrique selon la revendication 6 ou 7, **caractérisé en ce que** la ou les pointes ou broches (16) prévues sur le côté extérieur du corps de fixation (10) sont placées dans la zone du côté extérieur de corps de fixation qui est située à proximité de la face avant (3') de l'appareil d'installation (1).

9. Appareil d'installation électrique selon l'une quelconque des revendications 1 à 8, **caractérisé en ce que** le fond, guidant le corps de fixation (10), de l'évidement (9) prévu dans le corps formant socle (2) s'étend, tout comme le côté inférieur, proche de ce fond, du corps de fixation (10), de manière à descendre obliquement vers l'intérieur par rapport à un plan parallèle à la face avant (3') de l'appareil d'installation (1).
